# EUROPEAN PATENT APPLICATION

(11) **EP 3 054 564 A1**
(43) Date of publication of application: **10.08.2016**
(21) Application number: 16153923.4
(22) Date of filing: 02.02.2016
(51) Int. Cl.: H02K 1/32, H02K 9/19

(54) **ROTARY ELECTRIC MACHINE**

(30) Priority: 09.02.2015 JP 2015022903
(71) Applicant: Toyota Jidosha Kabushiki Kaisha, Toyota-shi, Aichi-ken 471-8571 (JP)
(72) Inventor: KANESHIGE, Keiichi, Toyota-shi, Aichi-ken,, 471-8571 (JP); MATSUMOTO, Masashi, Toyota-shi, Aichi-ken,, 471-8571 (JP); KITAGAWA, Katsuhide, Toyota-shi, Aichi-ken,, 471-8571 (JP); SHIRASAKI, Yasuaki, Toyota-shi, Aichi-ken,, 471-8571 (JP)
(74) Representative: Winter, Brandl, Fürniss, Hübner, Röss, Kaiser, Polte - Partnerschaft mbB

(57) **Abstract**

A rotary electric machine includes a rotor (20) and a rotor shaft (16). The rotor (20) has a cooling flow passage (41, 42) and the rotor shaft (16) is fixed to an inner peripheral surface of the rotor (20). The rotor shaft (16) has a hollow part (17) to which the liquid coolant is supplied, a coolant flow inlet (18) that provides communication between the hollow part (17) and the cooling flow passage (41, 42), and a coolant supply shaft (50) extending through the hollow part (17). The coolant supply shaft (50) has a coolant discharge port (52) that discharges the liquid coolant to the hollow part (17). A position in a rotor axial direction of the coolant flow inlet (18) deviates from a position in the rotor axial direction of the coolant discharge port (52).

## Description

### BACKGROUND OF THE INVENTION

### 1. Field of the Invention

The present invention relates to a rotary electric machine, and particularly to a cooling structure of a rotor.

### 2. Description of Related Art

In a rotary electric machine of the following Japanese Patent Application Publication No. 2014-176235, a rotor is cooled by supplying a liquid coolant from a coolant passage formed inside a rotor shaft to each cooling flow passage formed inside a rotor core.

In JP 2014-176235 A, the liquid coolant is directly supplied from the coolant passage inside the rotor shaft to each cooling flow passage inside the rotor core; therefore, amount of the liquid coolant supplied to each cooling flow passage inside the rotor core varies due to variation in pressure or the like of the liquid coolant in the coolant passage inside the rotor shaft.

### SUMMARY OF THE INVENTION

The present invention provides a rotary electric machine that suppresses variation in cooling performance of a rotor using a liquid coolant.

A rotary electric machine related to one aspect of the present invention includes a rotor and a rotor shaft. The rotor has a cooling flow passage and the rotor shaft is fixed to an inner peripheral surface of the rotor. The rotor shaft has a hollow part to which the liquid coolant is supplied, a coolant flow inlet that provides communication between the hollow part and the cooling flow passage, and a coolant supply shaft extending through the hollow part. The coolant supply shaft has a coolant discharge port that discharges the liquid coolant to the hollow part. A position in a rotor axial direction of the coolant flow inlet deviates from a position in the rotor axial direction of the coolant discharge port.

According to the present invention, each coolant flow inlet formed in the rotor shaft deviates from each coolant discharge port formed in the coolant supply shaft in either one of the rotor axial direction and the rotor circumferential direction, thereby suppressing direct influence of the flow of the liquid coolant discharged from the coolant discharge ports onto the flow of the coolant flow inlets. Accordingly, it is possible to suppress variation in amount of the liquid coolant supplied through the coolant flow inlets to the cooling flow passages of the rotor, thus suppressing variation in cooling performance of the rotor using the liquid coolant.

A rotary electric machine related to a second aspect of the present invention includes a rotor and a rotor shaft. The rotor has a cooling flow passage through which a liquid coolant flows and the rotor shaft is fixed to an inner peripheral surface of the rotor. The rotor shaft has a hollow part to which the liquid coolant is supplied, a coolant flow inlet that provides communication between the hollow part and the cooling flow passage, and a coolant supply shaft extending through the hollow part. The coolant supply shaft has a coolant discharge port that discharges the liquid coolant to the hollow part. A position in a rotor circumferential direction of the coolant flow inlet deviates from a position in the rotor circumferential direction of the coolant discharge port.

In the second aspect of the present invention, a position in the rotor axial direction of the coolant flow inlet may deviate from a position in the rotor axial direction of the coolant discharge port.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a longitudinal sectional view showing a configuration example of a rotary electric machine according to an embodiment of the present invention;
FIG. 2 is a view illustrating a flow of a liquid coolant in the rotary electric machine according to the embodiment of the present invention; and
FIG. 3 is a cross sectional view showing another configuration example of the rotor shaft and the coolant supply shaft in the embodiment of the present invention.

### DETAILED DESCRIPTION OF EMBODIMENT

Hereinafter, a mode for carrying out the present invention (hereinafter, referred to as an embodiment) will be described with reference to drawings.

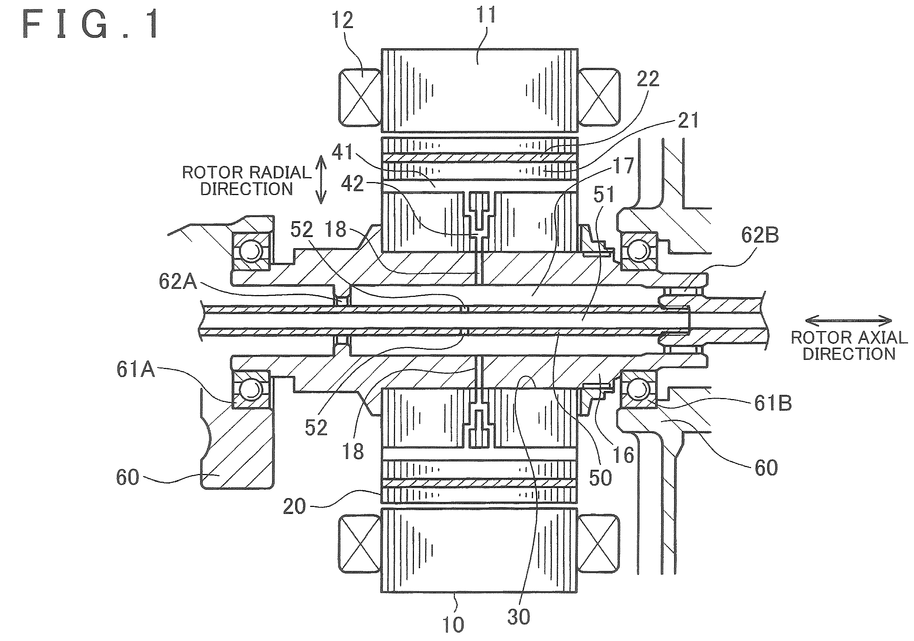

FIG. 1 is a longitudinal sectional view showing a schematic configuration of a rotatory electric machine according to the embodiment of the present invention. In the rotatory electric machine, a stator 10 is disposed circumferentially outward of a rotor 20, and the rotor 20 and the stator 10 are so arranged as to oppose each other with a distance (magnetic gap) in a radial direction therebetween. The stator 10 includes a stator core 11 and a coil 12 disposed to the stator core 11. The rotor 20 includes a rotor core 21 and plural permanent magnets 22 arranged in a rotor circumferential direction with intervals (e.g., equal intervals) therebetween in the rotor core 21. Each permanent magnet 22 extends in a rotor axial direction (direction along a rotational axis of the rotor 20). An inner peripheral surface of the rotor core 21 defines a shaft fitting hole 30 in a manner as to extend in the rotor axial direction. A rotor shaft 16 is fitted into the shaft fitting hole 30 for example by press-fitting or the like, so as to fit the rotor shaft 16 extending in the rotor axial direction to the inner peripheral surface of the rotor 20. The rotor shaft 16 is rotatably supported by a housing 60 through bearings 61 A, 61B so that the rotor 20 is rotatable relative to the stator 10 as well as the rotor shaft 16.

In order to cool the rotor 20, cooling flow passages through which a liquid coolant, such as a cooling oil, passes are formed inside the rotor core 21, for example. Inside the rotor shaft 16, there is formed a hollow part 17 to which a liquid coolant is supplied is formed in a manner as to extend in the rotor axial direction. The rotor shaft 16 is provided with plural coolant flow inlets 18 that provide communication between the hollow part 17 and the cooling flow passages of the rotor core 21. The plural coolant flow inlets 18 are arranged in the rotor circumferential direction with intervals (e.g., equal intervals) therebetween, and each coolant flow inlet 18 extends in the rotor radial direction.

The cooling flow passages of the rotor core 21 include plural first and second cooling flow passages 41, 42. The plural first cooling flow passages 41 are arranged in the rotor circumferential direction with intervals (e.g., equal intervals) therebetween. Each first cooling flow passage 41 is disposed circumferentially inward of the permanent magnets 22 in a manner as to extend in the rotor axial direction. Both ends in the rotor axial direction of each first cooling flow passage 41 open toward an outside of the rotor. The plural (the same number of the first cooling flow passages 41 and the coolant flow inlets 18) second cooling flow passages 42 are arranged in the rotor circumferential direction with intervals (e.g., equal intervals) therebetween. Each second cooling flow passage 42 provides communication between each coolant flow inlet 18 and each first cooling flow passage 41, and in an example of FIG. 1, each second cooling flow passage 42 extends from an inner end in the rotor radial direction thereof that communicates with each coolant flow inlet 18 to an outer end in the rotor radial direction thereof that communicates with each first cooling flow passage 41 in a manner as to branch stepwise into two. However, each second cooling flow passage 42 is unnecessarily formed to branch into two, and to extend stepwise. In the example of FIG. 1, each coolant flow inlet 18 and each second cooling flow passage 42 are connected to each other at a center position in the rotor axial direction thereof, but the connecting position in the rotor axial direction between each coolant flow inlet 18 and each second cooling flow passage 42 is unnecessary to be the center position.

A coolant supply shaft 50 extends in the rotor axial direction through the hollow part 17 inside the rotor shaft 16. In other words, an inner peripheral surface of the rotor shaft 16 and an outer peripheral surface of the coolant supply shaft 50 define a gap therebetween. The coolant supply shaft 50 is rotationally supported by a housing 60 through not-shown bearings. Furthermore, the coolant supply shaft 50 is supported by the rotor shaft 16 via seal members 62A, 62B. The seal members 62A, 62B are arranged with a distance in the rotor axial direction therebetween, and the hollow part 17 is located between the seal members 62A, 62B so that leakage of the liquid coolant from the hollow part 17 is prevented by the seal members 62A, 62B. The coolant supply shaft 50 is integrally rotated with the rotor 20 and the rotor shaft 16 at the same rotational speed.

Inside the coolant supply shaft 50, a coolant passage 51 through which the liquid coolant discharged from a not-shown pump flows is so formed as to extend in the rotor axial direction. In the coolant supply shaft 50, plural coolant discharge ports 52 that provide communication between the coolant passage 51 and the hollow part 17 of the rotor shaft 16 are also formed. The plural coolant discharge ports 52 are arranged in the rotor circumferential direction with intervals (e.g., equal intervals) therebetween.

In the present embodiment, in order to prevent each coolant flow inlet 18 of the rotor shaft 16 from opposing each coolant discharge port 52 of the coolant supply shaft 50 in the rotor radial direction, the coolant flow inlets 18 are arranged such that a rotor axial position of each coolant flow inlet 18 is different from a rotor axial position of each coolant discharge port 52 so as to locate each coolant flow inlet 18 at a position deviating in the rotor axial direction from each coolant discharge port 52. In the example of FIG. 1, each coolant discharge port 52 is illustrated at only one rotor axial position, and each coolant flow inlet 18 is illustrated at only one rotor axial position, but there may be formed the coolant discharge ports 52 at plural rotor axial positions, and there may be formed the coolant flow inlets 18 at plural rotor axial positions as far as a condition that each coolant flow inlet 18 deviates from each coolant discharge port 52 in the rotor axial direction so that each coolant flow inlet 18 does not oppose each coolant discharge port 52 in the rotor radial direction is satisfied.

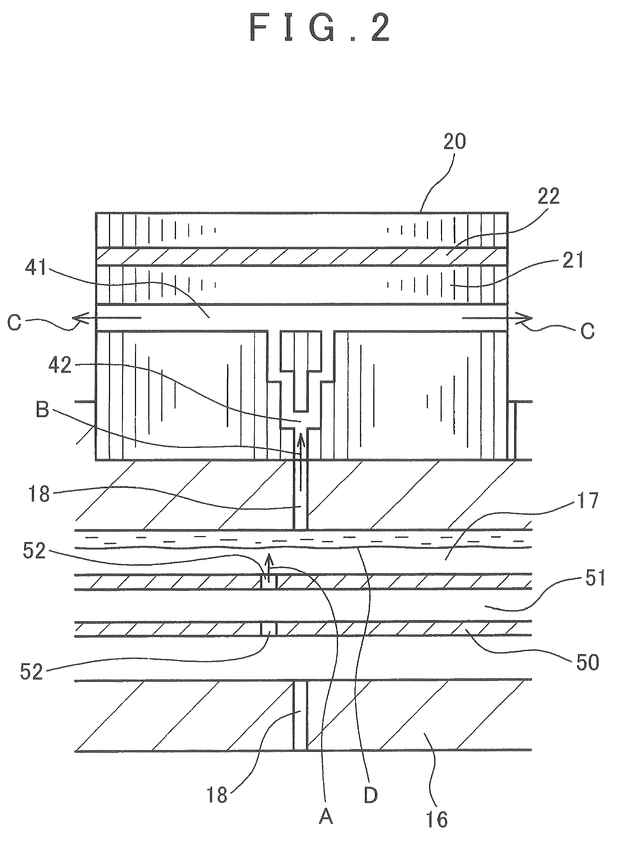

The liquid coolant supplied from the not-shown pump flows through the coolant passage 51 inside the coolant supply shaft 50, and is discharged from each coolant discharge port 52 into the hollow part 17 inside the rotor shaft 16 as indicated by an arrow A of FIG. 2, thereby temporarily storing the liquid coolant in the hollow part 17. The liquid coolant stored in the hollow part 17 inside the rotor shaft 16 flows into each coolant flow inlet 18 by a centrifugal force at the time of rotation of the rotor. The liquid coolant having flown into each coolant flow inlet 18 is supplied to each second cooling flow passage 42 as indicated by an arrow B of FIG. 2, and is then supplied to each first cooling flow passage 41. The liquid coolant flows through the second cooling flow passages 42 and the first cooling flow passages 41, thereby cooling the rotor 20 (the rotor core 21 and the permanent magnets 22). The liquid coolant flowing through the first cooling flow passages 41 is discharged from the both ends in the rotor axial direction of each first cooling flow passage 41 to the outside of the rotor as indicated by arrows C of FIG. 2.

Herein, supposing a case in which each coolant flow inlet 18 of the rotor shaft 16 opposes each coolant discharge port 52 of the coolant supply shaft 50 in the rotor radial direction, the liquid coolant discharged from each coolant discharge port 52 is directly supplied to each coolant flow inlet 18. At this time, if a discharge pressure of the liquid coolant from the coolant discharge ports 52 varies due to variation in discharge pressure of the pump or the like, amount of the liquid coolant supplied through the coolant flow inlets 18 to the first and second cooling flow passages 41, 42 of the rotor core 21 varies. Consequently, there occurs variation in cooling performance of the rotor 20 with the liquid coolant. In addition, the liquid coolant discharged from the coolant discharge ports 52 is repelled at the coolant flow inlets 18, and flows back; thus the flow of the liquid coolant is disturbed, and becomes unstable.

To the contrary, in the present embodiment, in order to prevent each coolant flow inlet 18 from opposing each coolant discharge port 52 in the rotor radial direction, the coolant flow inlets 18 are arranged such that the rotor axial position of each coolant flow inlet 18 deviates from the rotor axial position of each coolant discharge port 52, thereby preventing the liquid coolant discharged from the coolant discharge ports 52 from being directly supplied to the coolant flow inlets 18, temporarily storing the liquid coolant in the hollow part 17, and then supplying the liquid coolant to the coolant flow inlets 18. Through this configuration, it is possible to suppress direct influence of the flow of the liquid coolant discharged from the coolant discharge ports 52 onto the flow at the coolant flow inlets 18. For example, even if the discharge pressure of the liquid coolant from the coolant discharge ports 52 varies due to variation in discharge pressure of the pump or the like, it is possible to suppress variation in amount of the liquid coolant supplied through the coolant flow inlets 18 to the first and second cooling flow passages 41, 42 of the rotor core 21. It is possible to prevent the liquid coolant discharged from the coolant discharge ports 52 from being repelled at the coolant flow inlets 18 to flow back, thereby stabilizing a liquid level D of the liquid coolant stored in the hollow part 17, thus stabilizing the flow of the liquid coolant toward the coolant flow inlets 18. As a result, it is possible to suppress variation in cooling performance of the rotor 20 using the liquid coolant.

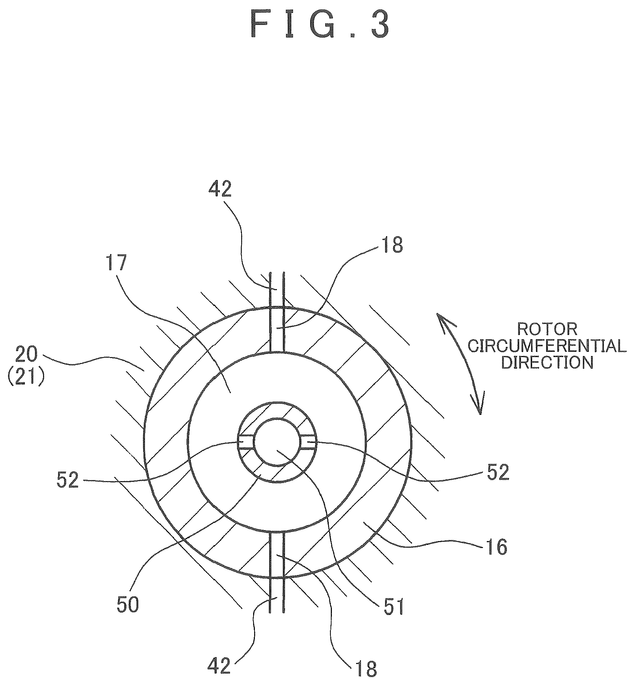

In the aforementioned embodiment, there has been described the example of disposing each coolant flow inlet 18 at a position deviating in the rotor axial direction from each coolant discharge port 52 so as to prevent each coolant flow inlet 18 from opposing each coolant discharge port 52 in the rotor radial direction. However, in the present embodiment, as shown in a cross sectional view of FIG. 3 that is vertical to the rotor axial direction, for example, in order to prevent each coolant flow inlet 18 from opposing each coolant discharge port 52 in the rotor radial direction, the coolant flow inlets 18 may be arranged such that a rotor circumferential position of each coolant flow inlet 18 is different from a rotor circumferential position of each coolant discharge port 52 so as to locate each coolant flow inlet 18 at a position deviating in the rotor circumferential direction from each coolant discharge port 52. In this case, it is also possible to suppress direct influence of the flow of the liquid coolant discharged from the coolant discharge ports 52 onto the flow at the coolant flow inlets 18. Moreover, in the present embodiment, each coolant flow inlet 18 may be arranged at a position deviating in two directions of the rotor axial direction and the rotor circumferential direction from each coolant discharge port 52 so as to prevent each coolant flow inlet 18 from opposing each coolant discharge port 52 in the rotor radial direction. As aforementioned, in the present embodiment, each coolant flow inlet 18 may be arranged in a manner as to deviate in either one of the rotor axial direction and the rotor circumferential direction from each coolant discharge port 52.

In the aforementioned embodiment, there has been described the example in which the coolant supply shaft 50 is integrally rotated with the rotor 20 and the rotor shaft 16 at the same rotational speed. However, in the present embodiment, the coolant supply shaft 50 may be supported by the rotor shaft 16 via bearings, or the like so that the coolant supply shaft 50 is rotated at a different rotational speed from that of the rotor 20 and the rotor shaft 16. In the present embodiment, it may be configured that the coolant supply shaft 50 is fixed to the housing 60, and the rotor shaft 16 is supported by the coolant supply shaft 50 via bearings, or the like so that the coolant supply shaft 50 is not rotated.

As aforementioned, the mode for carrying out the present invention has been explained, but the present invention is not limited to the aforementioned embodiment, and it is needless to mention that the present invention can be carried out in various modes without departing from the gist of the present invention.

## Claims

1. A rotary electric machine comprising:
a rotor (20) having a cooling flow passage (41, 42) through which a liquid coolant flows; and
a rotor shaft (16) fixed to an inner peripheral surface of the rotor (20), the rotor shaft (16) having:
a hollow part (17) to which the liquid coolant is supplied,
a coolant flow inlet (18) that provides communication between the hollow part (17) and the cooling flow passage (41, 42), and
a coolant supply shaft (50) extending through the hollow part (17), the coolant supply shaft (50) having a coolant discharge port (52) that discharges the liquid coolant to the hollow part (17),
wherein a position in a rotor axial direction of the coolant flow inlet (18) deviates from a position in the rotor axial direction of the coolant discharge port (52).

2. A rotary electric machine comprising:
a rotor (20) having a cooling flow passage (41, 42) through which a liquid coolant flows; and
a rotor shaft (16) fixed to an inner peripheral surface of the rotor (20), the rotor shaft (16) having:
a hollow part (17) to which the liquid coolant is supplied,
a coolant flow inlet (18) that provides communication between the hollow part (17) and the cooling flow passage (41, 42), and
a coolant supply shaft (50) extending through the hollow part (17), the coolant supply shaft (50) having a coolant discharge port (52) that discharges the liquid coolant to the hollow part (17),
wherein a position in a rotor circumferential direction of the coolant flow inlet (18) deviates from a position in the rotor circumferential direction of the coolant discharge port (52).

3. The rotary electric machine according to claim 2, wherein
a position in the rotor axial direction of the coolant flow inlet (18) deviates from a position in the rotor axial direction of the coolant discharge port (52).
